# EUROPEAN PATENT APPLICATION

(11) **EP 1 530 027 A2**
(43) Date of publication of application: **11.05.2005**
(21) Application number: 04256472.4
(22) Date of filing: 20.10.2004
(51) Int. Cl.: G01D 5/347

(54) **Optical rotary encoder**

(30) Priority: 29.10.2003 JP 2003369297
(71) Applicant: FANUC LTD, Minamitsuru-gun, Yamanashi 401-0597 (JP)
(72) Inventor: Kawai, Tomohiko c/o 1770-1, Kawaguchi, Yamanashi, 401-0304 (JP); Taniguchi, Mitsuyuki, Gotenba-shi, Shizuoka 412-0045 (JP); Minami, Hiroshi c/o Room 11-302, FANUC Manshonh., Yamanashi, 401-0511 (JP)
(74) Representative: Billington, Lawrence Emlyn

(57) **Abstract**

An optical rotary encoder is provided using a fluid bearing (6,7), which is space-saving, holds down costs for the high-precision processing of components, and has excellent maintainability. A rotary disk (10) is fixed to a disk holder (5) and is accommodated in a cylindrical case (20) together with a fluid bearing mechanism (6,7) and an optical detection unit (4). The optical detection unit (4) and the fluid bearing mechanism (6,7) provide a static system with the cylindrical case (20), which maintains a stationary state even if a rotary shaft (1) is rotated, and are mounted on static system mounting portions (2,3) with the cylindrical case (20). The disk holder (5) and the rotary disk (10) are fitted on the rotary shaft (1). Compressed air is sprayed onto both sides of the rotary disk (10) through a compressed air flow path (6) and a compressed air nozzle (7), to thereby restrict displacement of the disk (10) in a direction parallel to the rotary shaft (1). The compressed air is also sprayed through the compressed air flow path (6) onto the outer circumference of the disk holder (5), to thereby restrict displacement of the disk (10) in a direction perpendicular to the rotary shaft (1). As an alternative to air, it is also possible to use helium or oil as fluid in the fluid bearing (6,7).

## Description

### BACKGROUND OF THE INVENTION

### 1. Field of the Invention

The present invention relates to an optical rotary encoder attached to a rotary shaft of a motor or the like to detect rotational position of the rotary shaft, and more specifically to an optical rotary encoder having a mechanism that is useful for checkup, adjustment and the like of positional relation between a rotary disk and an optical detector for detecting the rotational position in manufacturing process, inspection process, maintenance, etc of the encoder.

### 2. Description of Related Art

An optical rotary encoder is commonly used to detect a rotation angle of a rotary shaft of, for example, a motor. In case that the optical rotary encoder is employed for detection of the rotation angle of the shaft that is rotatably supported, it is necessary to combine the rotary encoder with the rotary shaft. In general, the optical rotary encoder is prepared in a unit construction in which a glass or plastic disk (rotary code plate) provided with a code pattern made up of slits or the like is fitted to a rotary shaft, while in the static system, various optical elements for detecting the light modulated by the rotary code plate according to the rotation of the shaft are assembled in advance. These optical elements include a luminous object, such as an LED, a fixed mask, a light-receiving element and so on. In order to support the disk rotatably, a bearing, such as a ball bearing, is widely employed.

The optical rotary encoder having such a configuration is required to detect a rotation angle position of the rotary shaft with high accuracy. Therefore, the positional relation of the various optical elements including the disk has to be retained with high precision of several µm order. Especially in respect of a motor used for ultra-precision positioning, extra high precision is required at angle detection, and the rotation of the disk must be extremely smooth. If a bearing that creates friction is installed in the encoder unit, it deteriorates accuracy in angle detection and smoothness of rotation, thereby causing a trouble in ultra-precision positioning.

One of conceivable countermeasures against this problem is to provide the optical rotary encoder with a support mechanism capable of retaining positional relation between the rotary disk attached to the encoder and the optical detector for detecting a rotation angle such that the rotary disk is rotatable in a state where the rotary disk is detached from the rotary shaft (for example, of a motor) which is actually subjected to the rotation angle detection when being used, in the producing process, checkup process, maintenance and the like of the optical rotary encoder. Although a fluid bearing, for example, may be utilized as such a support mechanism, a drawback has been that the encoder unit takes a lot of space because of the fluid bearing. Moreover, components making up the fluid bearing have to be fabricated with extra high accuracy, so that there has been another drawback of being disadvantageous in terms of costs and man-hour.

There is know JP 3-94422U as a document which describes an optical rotary encoder using a fluid bearing. JP 3-94422U discloses an air spindle apparatus integrally with an encoder, in which a spindle of the encoder, which is provided with slits, is required to be fabricated as an air bearing with high accuracy. Furthermore, in spite that it is advantageous in consideration of maintenance if the encoder unit is detachable and adjustable as an individual body including a spindle shaft and an optical system, the encoder is not unitized in the structure described in the above publication, resulting in disadvantageous maintainability.

### SUMMARY OF THE INVENTION

The present invention provides an optical rotary encoder which is space-saving and has high maintainability and reduces a cost for machining high-precision components.

Based on knowledge that a rotary disk of the rotary encoder is made of glass, plastic, etc. having surfaces previously machined into smooth faces without distortion with high accuracy of several µm in flatness, the present invention introduces an idea of using the disk surfaces as thrust bearing faces of a fluid bearing, a slide bearing or a rolling bearing.

An optical rotary encoder of the present invention is attached to a rotary shaft to detect rotational position of the rotary shaft. The optical rotary encoder comprises: a rotary disk having opposite sides with code patterns for optical detection; a disk holder holding the rotary disk to be attached to the rotary shaft with the rotary disk; a bearing for rotatably supporting the opposite sides of the rotary disk to restrict displacement of the rotary disk in an axial direction thereof; and an static optical detector for detecting rotational position of the rotary disk using the code patterns.

The bearing may comprise a fluid bearing supplying fluid onto the opposite sides of the rotary disk. The fluid bearing may comprise a static-pressure air bearing.

Alternatively, the bearing may comprise sliding bearings or rolling bearings respectively provided between the opposite sides of the rotary disk and static elements confronting the rotary disk.

The optical rotary encoder may further comprise a fluid bearing for rotatably supporting a circumferential surface of the disk holder to restrict displacement of the rotary disk in a radial direction thereof. This fluid bearing may comprise a static-pressure air bearing.

In the optical rotary encoder according to the present invention, since the opposite sides of the rotary disk are used as thrust bearing surfaces of a static air bearing, sliding bearings or rolling bearings for restricting displacement of the rotary disk in an axial direction thereof, positional relation between the rotary disk and the static optical detector is maintained with high precision, and there is no need of providing an additional space for the bearing for restricting the axial displacement of the rotary disk and no need of high-precision machining of bearing faces of the bearing. The encoder of the present invention is so constructed as to be detachable from the rotary shaft as a unit, thereby providing high maintainability.

### BRIEF DESCRIPTION OF THE DRAWINGS

FIG. 1 is a cross-sectional view for explaining a general configuration of an optical rotary encoder according to a first embodiment of the present invention and attachment and detachment of the encoder with respect to a rotary shaft;
FIG. 2 is a view showing the optical rotary encoder of FIG. 1 in section taken along line A-A of FIG. 1;
FIG. 3 is a cross-sectional view for explaining a general configuration of an optical rotary encoder according to a second embodiment of the present invention; and
FIG. 4 is a cross-sectional view for explaining a general configuration of an optical rotary encoder according to a third embodiment of the present invention.

### DETAILED DESCRIPTION

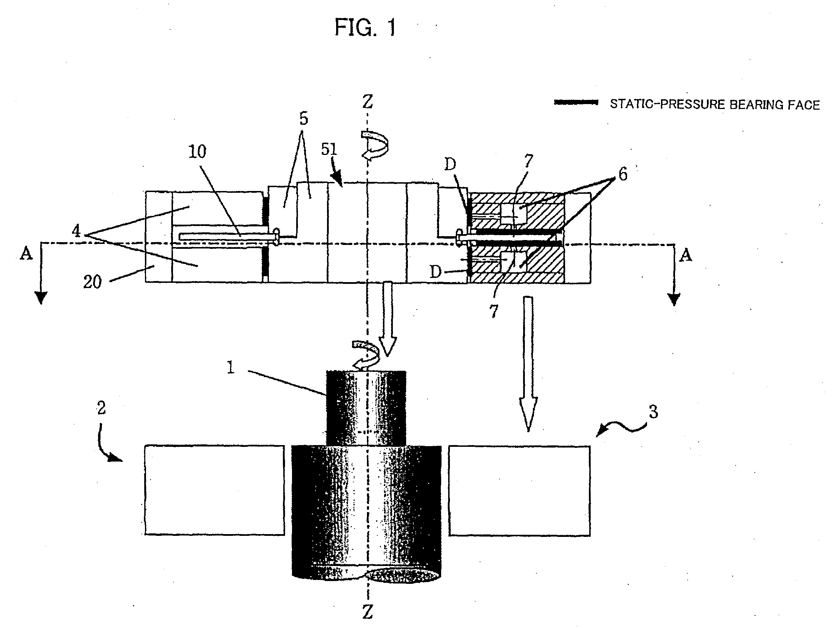

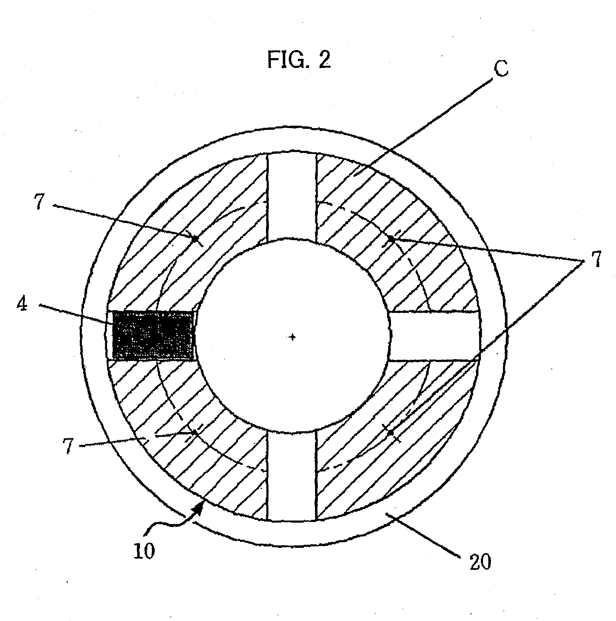

Hereinafter, the best mode for carrying out the present invention will be explained referring to FIGS. 1 through 4. First of all, a first embodiment (in which a fluid bearing is employed) of the present invention will be described with reference to FIGS. 1 and 2. FIG. 1 is a cross-sectional view for explaining a general configuration of an optical rotary encoder according to the first embodiment and attachment and detachment of the encoder with respect to a rotary shaft (one actually subjected to rotation angle detection when being used; for example, a rotary shaft of a motor). FIG. 2 is a cross-sectional view taken along line A-A of FIG. 1.

In the above drawings, reference numeral 10 represents a rotary disk in which a code pattern consisting of light-transmitting sections and light-shielding sections is formed with a prescribed pattern. Reference numeral 1 denotes a rotary shaft that rotates around an axis shown by Z--Z. The rotary disk 10 is fixed to a disk holder 5 for supporting the rotary disk 10 by means of proper fixing means, such as a fixing screw. The rotary disk 10 is accommodated in a cylindrical case 20 together with an optical detection unit 4 including various optical elements for detecting the light modulated according to rotation of a rotary shaft 1 and an after-mentioned fluid bearing mechanism.

The optical elements included in the optical detection unit 4 are for example a luminous object, such as an LED, a fixed mask, a light-receiving element, and the like. As the optical detection unit 4 thus composed is well known, illustration and detailed explanation of each of the optical elements will be omitted. The optical detection unit 4 and the fluid bearing mechanism are elements composing a static system with the case 20, which maintains a stationary state even if the rotary shaft 1 is rotated, and are fastened to the case 20 by means of proper fixing means (such as a screw clamp, adhesion, and integration).

The disk holder 5 has a column-shaped opening portion 51 extending in a direction precisely perpendicular to an expanded plane of the rotary disk 10. There is formed a bore having an identical diameter to the opening portion 51 in a central region of the bottom of the case 20.

The opening portion 51 has an internal diameter that is interfitted with the rotary shaft 1 through the bore of the case bottom and fitted in with an external diameter of the rotary shaft 1. Prepared around the rotary shaft 1 are static system mounting portions represented by reference numerals 2 and 3. As shown by an arrow in FIG. 1, the static system (the optical detection unit 4 and an air bearing mechanism) can be mounted on the static system mounting portions 2 and 3 together with the case 20. The static system mounting portions 2 and 3 may be formed by a frame or the like having a size and a shape appropriate for the setting of the static system may be provided fixedly to adjacent stationary objects.

Once the static system is mounted on the static system mounting portions 2 and 3, the disk holder 5 and the rotary disk 10 are interfitted with the rotary shaft 1. The disk holder 5 is fastened to the rotary shaft 1 by using well-known fixing means, such as a fixing screw. By so doing, if the rotary shaft 1 is rotated, the same rotational motion is simultaneously generated in the disk holder 5 and the rotary disk 10. Along with the rotation, an optical signal is produced in the optical detection unit 4 according to the rotation of the rotary shaft 1. The optical light is converted into an electrical signal in a well-known aspect, to thereby detect a rotation angle position of the rotary shaft 1.

In order to make such detection stable and high-precision, it is required that positional relation between the luminous object (for example, an LED) disposed in the optical detection unit 4 and a photo-detector be maintained with high precision when the rotary disk 10 and the disk holder 5 are rotated. The air bearing mechanism is provided to make it possible to maintain the positional relation between the rotary disk 10 and the optical detection unit (optical detector for detecting rotation angle) 4 such that the rotary disk 10 is rotatable in a state where it is detached from the rotary shaft 1 in the producing process, checkup process, maintenance and the like of the optical rotary encoder. Applied as an air bearing mechanism here is a configuration for spraying compressed air onto both sides of the rotary disk 10 and an outer circumferential surface of the disk holder 5 through a compressed air flow path 6 and compressed air nozzles 7.

The compressed air flow path 6 is connected to a compressed air supply source, not shown, and receives therefrom the supply of the compressed air adjusted to be moderately high pressure. Referring to FIG. 2, a hatched part shown by reference character C exemplifies the surface of the rotary disk 10 which serves as a static-pressure bearing face. Reference numeral 7 represents positions of the compressed air nozzles that spray the compressed air onto both sides of the rotary disk 10. Size, spray pressure and the like of the compressed air nozzles 7 are designed such that both static-pressure bearing faces of the rotary disk 10 receive an equal force from the compressed air. By so doing, during the rotation of the rotary shaft 1, "displacement of the rotary disk 10, which is generated in a direction parallel to the rotary shaft 1" is restricted. As a result, the positional relation between the luminous object (for example, an LED) and the photo-detector is retained with high precision in relation to the direction parallel to the rotary shaft 1.

As illustrated in FIG. 1, the compressed air can be sprayed from the compressed air flow path 6 onto an outer circumference (refer to reference character D) of the disk holder 5. Accordingly, "displacement generated in a direction (radial direction) perpendicular to the rotary shaft 1" is restricted, too. Consequently, the positional relation between the luminous object (for example, an LED) and the photo-detector is retained with high precision. A position and pressure of the spray directed to the outer circumference of the disk holder 5 are determined such that an unsymmetrical force does not act with respect to an axis Z--Z.

As described above, in the optical rotary encoder shown in FIGS. 1 and 2, the surfaces of the rotary disk 10 are used as thrust bearing faces that restrict a static-pressure air bearing with respect to the rotational axis direction. Therefore, it is possible to construct the static bearing that maintains the positional relation with the optical elements with high accuracy without preparing extra space. Furthermore, since the surfaces of the rotary disk 10, which are previously fabricated with high precision, are used as static-pressure bearing faces, it is not necessary to newly perform the processing of components with high accuracy. The encoder is so constructed as to be detachable from the rotary shaft as a unit in a direction opposite to the arrow in FIG. 1 without difficulty, thereby providing fine maintainability.

As the fluid to be made to flow in the fluid bearing mechanism, it is possible to use not only air mentioned in the above embodiment but also other gases (for example, helium and carbon dioxide gas) or a liquid like oil.

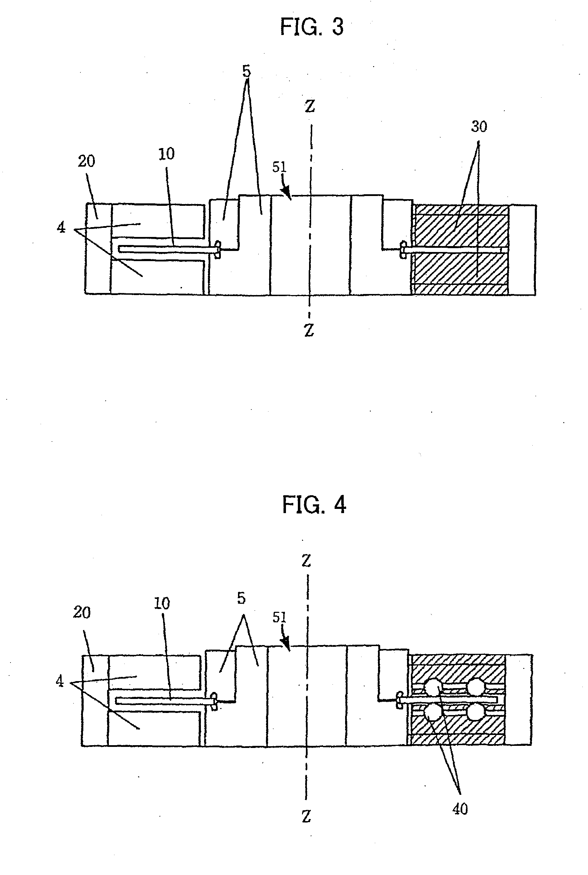

If a slide bearing or a rolling bearing is disposed in between both sides of the rotary disk 10 and element surfaces facing the respective sides of the disk in place of the fluid bearing employed in the above embodiment, the displacement of the rotary disk 10, which is generated in the rotational axis direction, can be restricted. Such examples are illustrated in FIGS. 3 and 4 in section as second and third embodiments. FIG. 3 is an example in which a slide bearing is employed, and FIG. 4 is an example in which a rolling bearing is employed. In FIGS. 3 and 4, parts corresponding to the rotary shaft 1 and the static system-supporting portion 3 in FIG. 1 are not shown. In the second and third embodiments, however, these parts are identical, so that "rotary shaft 1" and "static system-supporting portion 3" are used in the following explanation as well.

Like in the case of the first embodiment (FIGS. 1 and 2), the rotary disk in which the code pattern, not shown, consisting of the light-transmitting sections and the light-shielding sections is formed with the prescribed pattern, is denoted by reference numeral 10. The rotational axis line is represented by Z-Z. The rotary disk 10 is fixed to the disk holder 5 for supporting the rotary disk 10 by proper fixing means, such as a fixing screw. The rotary disk 10 is accommodated in the cylindrical case 20 together with the optical detection unit 4 including various optical elements for detecting the light modulated according to the rotation of the rotary shaft 1 and the bearing mechanism. The optical detection unit 4 is designed as described above, and the explanation will not be repeated. The optical detection unit 4 and the bearing mechanism are elements composing the static system with the case 20, which maintains a stationary state even if the rotary shaft 1 is rotated, and are fixed to the case 20 by proper fixing means (such as a screw clamp, adhesion, and integration).

The disk holder 5 has the column-shaped opening portion 51 extending in the direction precisely perpendicular to the expanded plane of the rotary disk 10. There is formed a bore having an identical diameter to the opening portion 51 in a central region of the bottom of the case 20. The opening portion 51 has an internal diameter that is interfitted with the rotary shaft 1 through the bore of the case bottom and fitted in with an external diameter of the rotary shaft 1. Prepared around the rotary shaft 1 are static system mounting portions as shown by reference numerals 2 and 3. Therefore, as shown by an arrow in FIG. 1, the static system (the optical detection unit 4 and a bearing mechanism) can be mounted on the static system mounting portions 2 and 3 together with the case 20.

Herein, as illustrated in FIGS. 3 and 4, the bearing mechanism is a slide bearing 30 in the second embodiment and is a rolling bearing 40 in the third. Both the bearings 30 and 40 are interposed in between both sides of the rotary disk 10 and the elements (ones constructing a part of each bearing mechanism) opposed to the respective sides, to thereby restrict the position of the rotary disk 10 in relation to a rotational axis direction of the bearings 30 and 40. Since the surfaces of the rotary disk 10 function as thrust bearing faces that restrict the bearings 30 and 40 with respect to the rotational axis direction, it is possible to form the bearing that maintains the positional relation with the optical elements with high precision without preparing extra space. Furthermore, the surfaces of the rotary disk 10, which are previously fabricated with high accuracy, are used as bearing faces, so that it is not necessary to newly perform the processing of components with high accuracy. The encoder is so constructed as to be detachable from the rotary shaft as a unit in a direction opposite to the arrow in FIG. 1 without difficulty, thereby providing fme maintainability.

## Claims

1. An optical rotary encoder to be attached to a rotary shaft for detecting rotational position of the rotary shaft, comprising:
a rotary disk having opposite sides with code patterns for optical detection;
a disk holder holding said rotary disk to be attached to the rotary shaft with said rotary disk;
a bearing for rotatably supporting the opposite sides of said rotary disk to restrict displacement of said rotary disk in an axial direction thereof; and
an static optical detector for detecting rotational position of said rotary disk using the code patterns.

2. An optical rotary encoder according to claim 1, wherein said bearing comprises a fluid bearing supplying fluid onto the opposite sides of said rotary disk.

3. An optical rotary encoder according to claim 2, wherein said fluid bearing comprises a static-pressure air bearing.

4. An optical rotary encoder according to claim 1, wherein said bearing comprises sliding bearings respectively provided between the opposite sides of said rotary disk and static elements confronting said rotary disk.

5. An optical rotary encoder according to claim 1, wherein said bearing comprises rolling bearings respectively provided between the opposite sides of said rotary disk and static elements confronting said rotary disk.

6. An optical rotary encoder according to claim 1, further comprising a fluid bearing for rotatably supporting a circumferential surface of said disk holder to restrict displacement of said rotary disk in a radial direction thereof.

7. An optical rotary encoder according to claim 6, wherein said fluid bearing comprises a static-pressure air bearing.
